# EUROPEAN PATENT SPECIFICATION

(11) **EP 0 323 849 B1**
(45) Date of publication and mention of the grant of the patent: **04.09.1996**
(21) Application number: 89100166.1
(22) Date of filing: 05.01.1989
(51) Int. Cl.: H04N 1/46

(54) **Color film analyzing method and apparatus therefore**
Verfahren und Vorrichtung zum Auswerten von Farbfilmen
Procédé et appareil pour l'évaluation d'un film en couleurs

(30) Priority: 08.01.1988 JP 2034/88; 03.02.1988 JP 22989/88; 03.02.1988 JP 22990/88; 03.02.1988 JP 22991/88; 03.02.1988 JP 22992/88; 05.02.1988 JP 25116/88; 04.03.1988 JP 51201/88
(43) Date of publication of application: 12.07.1989
(60) Divisional application: 94112841.5
(73) Proprietor: FUJI PHOTO FILM CO., LTD., Kanagawa 250-01 (JP)
(72) Inventor: Hayashi, Ryoichi, Minato-ku Tokyo (JP); Sakamoto, Kiichiro c/o Fuji Photo Film Co., Ltd., Ashigarakami-gun Kanagawa-ken (JP); Sakamoto, Yoshiaki c/o Ric Corporation, Tokyo (JP); Sugiura, Yutaka K.K. Fuji Color Service, Tokyo (JP)
(74) Representative: Grünecker, Kinkeldey, Stockmair & Schwanhäusser Anwaltssozietät

(56) References cited:
- EP-A- 0 108 158
- EP-A- 0 177 857
- DE-A- 2 705 097
- GB-A- 1 540 525
- GB-A- 2 191 655
- US-A- 4 279 502
- US-A- 4 364 084
- US-A- 4 608 596
- US-A- 4 689 669

## Description

### Background of the Invention

The present invention relates to a method and apparatus used for analysing or inspecting color films.

Video type color film analyzers are well known in the art. One example disclosed in JP-A-62/141.530 has a color TV camera for providing color image data of picture frames of a number of rolls of color films spliced one another. The color image data of the respective picture frames are stored in a memory. The color image data of each picture frame read out from the memory is, after having been transformed in gradation based on its large area transmittance density (LATD) and transformed from negative form to positive form, sent to one of a plurality of CRT displays arranged in a line to display a simulated color image thereon. Color film analyzer of this type can display a plurality of color images, simulated and to be simulated, on the CRT displays in a line. The center CRT display displays a color image under inspection and/or correction and the remaining CRT displays, in particular on one side of the center CRT display, color images inspected and corrected if needed and, on the opposite side of the center display, color images to be inspected. Therefore, the simulated color image on the center CRT display can be estimated comparing with adjacent corrected and uncorrected color images.

In another color film analyzer of this type disclosed in, for example, US-A-4,364,084 and US-A-4,531,150, the color images simulated or to be simulated are displayed in a matrix pattern. Any one of the displayed color images, if undesirable in color and/or density as a printed image, is specified with such as a light pen to correct exposure. Image data of the specified image is transformed in gradation according to the corrected exposure so that the color image is correctly changed in color and/or density.

The image data of picture frames to be displayed are written in and read out from an image memory as is disclosed in, for example, EP-A-0 108 158.

Such video type color film analyzers are associated with various drawbacks. Because a roll of color film often includes frames bearing unintended principal subject images, blurred images or the like which usually need not be printed. The color film analyzers heretofore used are hard to specify an image or images which are unnecessary to print from visual inspection. It is therefore often to repeatedly specify picture frames having no necessity of print.

It is also difficult to determine whether each simulated image is proper in color balance and/or density.

A problem of the conventional video type color film analyzers is to specify the number of prints for each picture frame to be printed. Since the specified number of prints can not be displayed on any part of the analyzer, it is impossible to confirm the specified number of prints at any desired time. Furthermore, if the same number of prints is required for all of the picture frames to be printed, it is usual to specify the same number for each picture frame. This is a quite troublesome inspection work.

### Object of the Invention

It is the object of the present invention to provide a video type color film analysing method and apparatus in which a number of prints can be specified not only individually to respective picture frames to be printed but also commonly to all of the picture frames to be printed of one film within a spliced film web.

### Summary of the Invention

The above object of the present invention can be achieved by the features of the claim.

In analysing or inspecting a color film, the standard reference images having proper density and color balance are displayed in an image matrix. Image data of a plurality of picture frames are provided by a color TV camera one by one and displayed in a plurality of columns or rows of the image matrix. The displayed image of each picture frame is compared with the standard reference images displayed in a row or a column on the display device and evaluated or analysed or inspected. If an image is evaluated unfavorable to print, the image is specified to enter image correction data. If any one of the images displayed on the image display device is specified, the column or row of images of the image matrix including the specified image is shifted adjacent to the column or row of the standard reference images, it is thereby made quite easy to compare the specified image with the standard reference images.

When specifying any one of images of a plurality of picture frames displayed in a matrix on the image display device, a mark or cursor is displayed overlapping the specified image. The mark or cursor is preferably colored differently from the color of the part of the specified image where the mark or cursor is inlaid.

This differently colored mark or cursor is used to significantly indicate that the image with the mark or cursor is under inspection or evaluation or that the specified image is unfavorable to print.

According to another preferred embodiment of the present invention, when specifying any one of images of a plurality of picture frames, the specified image is magnified and displayed at the center of the screen of the image display device and,on the other hand, the remaining images are disappeared.

According to the present invention, when specifying any one of images of a plurality of picture frames displayed on the image display device and then entering data of the number of prints to be made from the specified image picture frame, the number is displayed overlapping the specified image. When specifying a section formed between two spliced sections of a film web comprising a plurality of spliced films and then entering the number of prints to be made, the number is displayed on the image of the spliced section and the number of prints is available for all of the picture frames to be printed.

### Brief Description of the Drawings

The description refers to the accompanying drawings in which like reference characters refer to like parts throughout the several drawings, and wherein:
Figure 1 is a perspective view showing a color film analyzer embodying the present invention;
Figure 2 is a block diagram showing the color analyzer of Fig.1;
Figure 3 is a block diagram showing an image signal processing section of Fig. 2;
Figure 4 is a block diagram showing details of an image memory of Fig. 3;
Figure 5 is an illustration of a screen of a color image display device;
Figure 6 is an illustration of part of a film web consisting a plurality of rolls of films spliced one another;
Figure 7 is a flow chart illustrating the sequence of color film inspection;
Figure 8 is a flow chart illustrating the sequence of displaying a cursor for specifying an image;
Figure 9 is a flow chart illustrating the sequence of transforming gradation;
Figure 10 is a flow chart illustrating the sequence of specifying the number of prints individual to each picture frame prior to that common to the respective picture frames to be printed.

### Detailed Description of the Invention

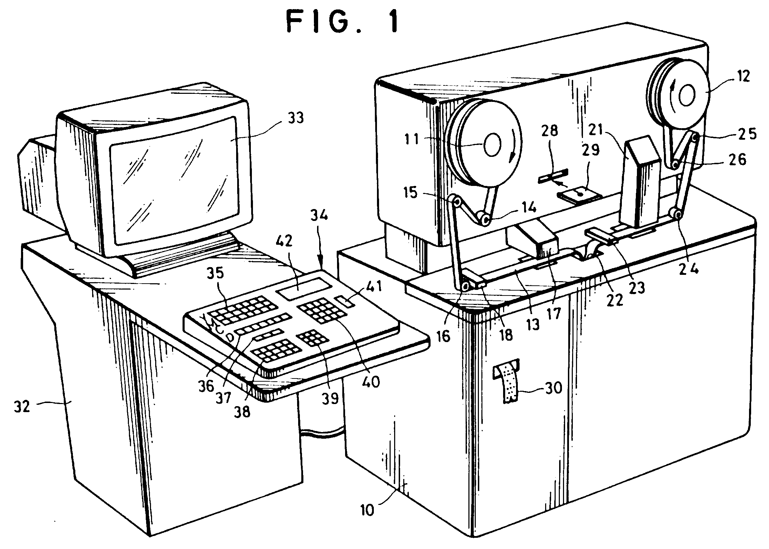

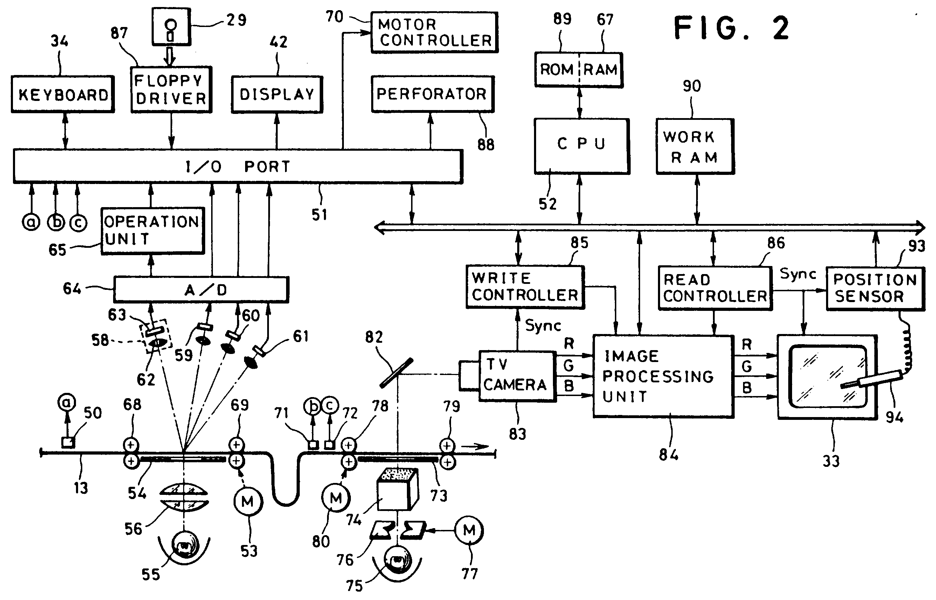

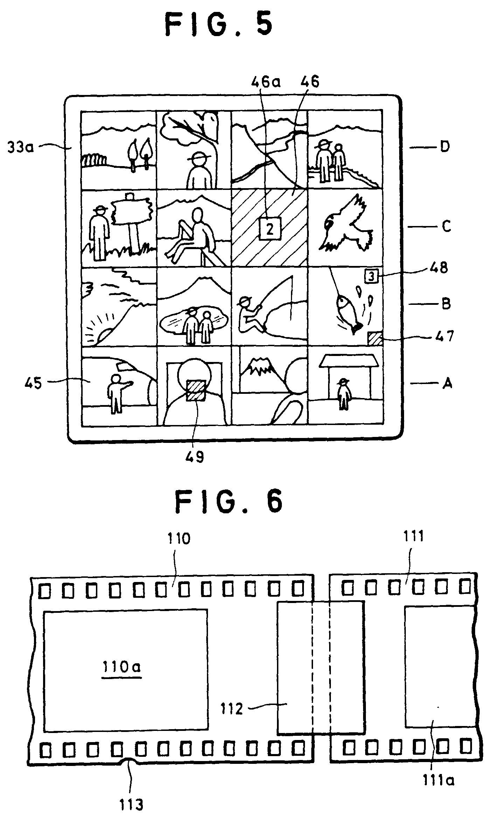

Referring now to the drawings, in particular Figs. 1 and 2, a color film analyzer is shown having a color film analyzer unit 10 and an operation unit 32. The color film analyzer unit 10 includes film supply and film take-up reels 11 and 12 detachably mounted thereon. The film supply reel 11 has a film web 13 consisting of a number of rolls of color negative films spliced one another wound in a roll therearound. The spliced color film web 13 is withdrawn from the film supply reel 11 by means of a drive roller 16 and guide rollers 14 and 15 to position picture frames thereof at a measuring station. Above the measuring station, there is a sensor unit surrounded 58 with a hood 17 for measuring each picture frame at the measuring station. Between the feed roller 16 and the measuring station there is a notch sensor 50 supported by an arm 18 for detecting notches 113 (see Fig. 6) formed in association with picture frames to be printed.

The spliced color film web 13 is further transported to an image pick-up station where a mirror 82 surrounded with a hood 21 is disposed. At the image pick-up station, an image of a picture frame is reflected by the mirror 82 and picked up by a color TV camera 83. For independently, separately positioning each picture frame at the measuring and image pick-up stations, a utility space 22 is provided to temporarily store the analysed part of the spliced color film 13 in a loop therein. Between the utility space 22 and the hood 21 there is an arm 23 supporting a spliced section sensor for detecting spliced sections of the spliced color film 13 and a notch sensor 50 for detecting the notches 113. After the image pick-up station the spliced color film 13 is further transported with a drive roller 24 and guide rollers 25 and 26 and wound up around the take-up reel 12.

A floppy loading slot 28 is provided through which a magnetic floppy 29 with image data of standard reference image or images recorded thereon is loaded. A tape perforator 88 is incorporated in the color film analyzer unit 10 to punch a paper tape 30 to form printing data code in the paper tape after the analyzation of the spliced color film 13. The printing data includes common data to all picture frames of the spliced film 13 and individual data unique to the individual picture frame of the spliced film 13. Such common data preferably include data on film type, film size (full size or half size), the common number of prints to be made from the respective picture frames, etc. of the spliced film 13. On the other hand, the individual data include data on exposure correction, the number of prints to be made from the picture frame, or the needlessness of print, etc.

On the operation unit 32 there are a color monitor 33 with a large size screen 33a and a keyboard 34. This color monitor 33, which displays color images of picture frames of the spliced film 13 to be analysed on the screen, may be a color CRT or, otherwise as desirable, a liquid crystal display panel. The keyboard 34 has various keys such as alphabetical and numerical keys 38, color keys 35, density keys 36, correction keys 37, operation keys 39, picture frame specifying keys 40 and a page change key 41, and a display screen 42. The color keys 35 include correction keys for cyan, magenta and yellow. For each color, a plurality of correction keys are provided to correct color stepwise. The density keys 36 has a single line of density correction keys to correct density stepwise. The alphabetical and numerical keys 38 are used to enter data on printing condition, the number of prints to be made, film type and film size. The operation keys 39 include various keys for starting the analyzation of color film, printing out the entered correction data, designating display modes, or the like. The picture frame specifying keys 40 comprise 16 keys corresponding to 16 picture frames and are used to designate or specify one of the images displayed on the screen 33a prior to the entry of data as to the image. The page change key 41 is used to replace quickly an image frame including a plurality of color images displayed on the screen 33a of the color monitor 33 with another image frame. The display screen 44 displays the data entered.

The color monitor 33 can display images of a plurality of picture frames of the spliced film 13 in various display modes. For example, the image frame can be displayed in a sixteen-division display mode or twelve-division display mode, or even in single-division display mode. Any desired display mode can be selected with the operation keys 39 before inputting image data of picture frames of the spliced film 13 through the color TV camera 83. When displaying the images of picture frames of the spliced film 13 in the sixteen-division display mode, the screen 33a is, as is shown in Fig. 5, notionally divided into four rows (A, B, C and D), each being divided into four divisions, so that in total sixteen divisions result, and displays positive color images 45 of sixteen picture frames, one on each division of the screen 33a. It is noted that the images of the respective rows A - D are arranged in the order of the image input through the color TV camera 83. That is, the images in the row A are inputted prior to those of the row B and accordingly the images in the row D are lastly inputted among all of the images in the rows A - D. It is also noted that a left-hand image is inputted prior to a right-hand image adjacent thereto in each row. If selecting or designating the twelve-division display mode, four standard reference images having standard colors and densities are read out from the magnetic floppy 29 and displayed in the last or bottom row D while images of twelve picture frames inputted through the color TV camera 83 are displayed in the lower three rows A - C of the screen 33a. If selecting or designating the single-division display mode, an image of a single picture frame is magnified four times or more as large as a usually displayed image size and displayed within the central four divisions of the screen 33a.

As was previously noted and shown in Fig. 2, the color film analyzer including the notch sensor 50 supported by the arm 18 detects a notch 113 formed in association with a picture frame to be printed to provide an appropriate notch signal which in turn is sent to a central processing unit (CPU) 52 through an I/O port 51. Since the distance between the notch sensor 50 and the measuring station is previously known, a picture frame with a notch 113 can be positioned at the measuring station by advancing the spliced film 13 by the distance after the detection of the associated notch 113. For effecting such film advancement, a pulse motor 53 is used and driven with a controlled number of drive pulses.

A film framing mask or carrier 54 is disposed to place each picture frame of the spliced film 13 in position at the measuring station. The picture frame in the film framing mask 54 is illuminated with the light emitted from a lamp 55 and passed through a condensor lens assembly 56. The light, after passing through the picture frame of the spliced film 13 placed on the film framing mask 54, is focussed, measured with a scanner unit 58 and with the respective color sensors 59, 60 and 61 for red, green and blue, all of them are surrounded with the hood 17. The scanner unit 58 includes a focusing lens 62 and an image area sensor 63 to photoelectrically convert light passed through respective pixels of the picture frame and focused thereon into time-serial image signals. After being converted into digital image signals by A/D converter 64, the time serial signals are sent to an operation unit 65 comprising an eight-bit microcomputer and converted thereby into logarithmic signals which are used as density signals. The density signals thus obtained are stored in a memory. Then, the density signals for pixels within a previously specified area of the picture frame are read out to calculate an arithmetical mean density of the specified area of the picture frame. In such a manner as described above, arithmetical mean densities are calculated as to a central area, upper and lower half areas excepting the central area, respectively. Based on a distribution of the densities of these areas of the picture frame, a density pattern is determined and according to which an appropriate exposure calculation formula is selected to calculate an appropriate exposure correction value. The correction value thus calculated is stored in a RAM 67.

The color sensors 59 to 61 for red, green and blue measure large area transmittance densities (LATDs) of each picture frame of the spliced film 13 placed in position on the film framing mask 54 to provide appropriate electric signals (LATD signals) which in turn are, after being converted into digital signals in A.D converter 64, sent to the CPU 52 through the I/O port 51. Based on the LATD signals, a correction value and a transmittance rate of ND filter are calculated for each color in the CPU 52 and stored in the RAM 67.

On the opposite sides of the film framing mask 54 there are two pairs of rollers 68 and 69 driven by a pulse motor 53. A motor controller 70 controls the rotation of the pulse motor 53 so as to advance and place the spliced film 13 in position.

After the measurement, the spliced film 13 is again transported passing through the utility space toward the image pick-up station. Before the image pick-up station there is the notch sensor 71 and the spliced section sensor 72 supported by the arm 23. The notch sensor 71 detect notches 113 to provide electric notch signals which in turn are sent to the CPU 52 through the I/O port 51 and used to place picture frames as was previously noted. The spliced section sensor 72 detects a spliced section between each two rolls of films of the spliced film 13 to provide electric spliced-row signals which are also sent to the CPU 52 through the I/O port 51. When receiving a notch signal, the CPU 52 provides image data based on which a blank image 46 is displayed to indicate that a spliced section is present between the picture frames whose images are displayed on the divisions adjacent to and on both sides of the blank image.

At the image pick-up station there is a film framing mask 73 to place picture frames of the spliced film 13 in position. An image frame on the film framing mask 73 is illuminated with the light emitted from a lamp 75 passing a mixing box 74 and then a ND filter assembly 76. The ND filter assembly 76 has two ND filters which are controllably moved in opposite directions in a plane perpendicular to the optical path by a pulse motor 77. Specifically, the ND filters are moved away from each other and displaced from the optical path for excessively over-exposed picture frames or close to each other and placed in the optical path for excessively under-exposed picture frames. Each picture frame is judged at the measuring station whether it is properly exposed, over-exposed or under-exposed.

On both sides of the film framing mask 73 there are two pairs of rollers 78 and 79 driven by a pulse motor 80. The motor controller 70 controls the rotation of the pulse motor 80 so as to advance and place picture frames with notches 113 of the spliced film 13 in position at the image pick-up station in order. An image of each picture frame placed at the image pick-up station is reflected with the mirror 82 surrounded by the hood 21 and directed to the color TV camera 83 built in the analyzer unit 10. The color TV camera 83 picks up the image to provide color image signals R, G and B for red, green and blue, and synchronizing signals Sync. These color signals R, G and B are, after being subjected to image processing in a image processing section 84, sent to the color monitor 33. A write controller 85 generates address signals based on the synchronizing signals Sync and controls to write data in the image processing section 84 with the address signals. A read controller 86 is controlled by the CPU 52 to generate address signals for reading out data from the image processing section 84 and synchronizing signals to be sent to the color monitor 33.

A floppy drive 87 reads out image data of the standard reference images and writes them in the image processing section 84. The perforator 88 is actuated upon the completion of analyzation to punch the paper tape 30 to form punched codes on common and individual printing data in a paper tape 30. IN the ROM 89 various data, such as fixed printing data, operation program data and the like are memorized. Work RAM 90 is used to back up image data.

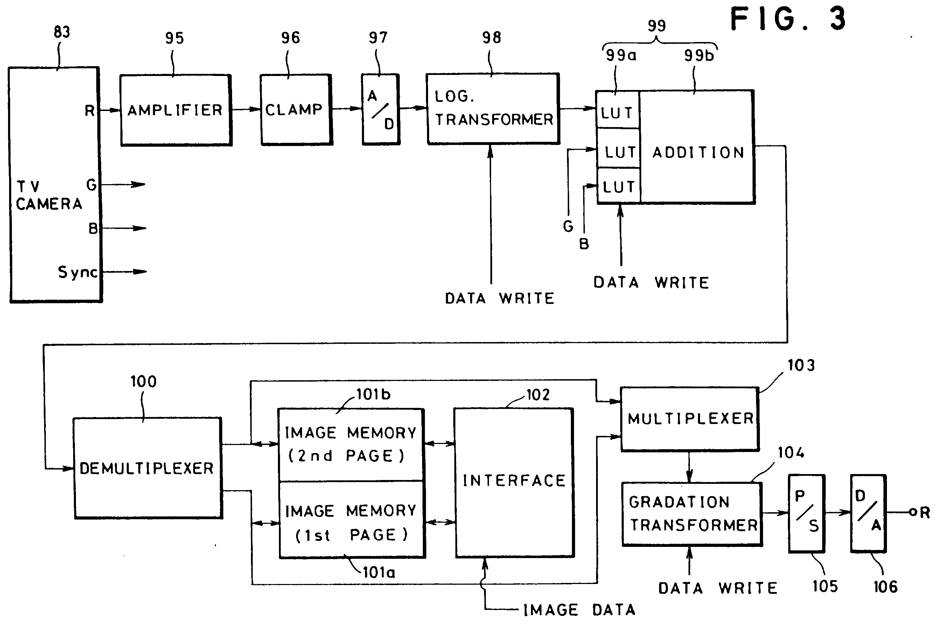

Referring to Fig. 3 showing an embodiment of the image processing section 84 of Fig. 2. It is noted that image signal processing systems for red, green and blue are all identical and therefore only one, for example, for red is representatively shown in Fig. 3. As shown, red image signals R provided from the TV camera 83 are, after amplified in an amplifier circuit 95, sent to a clamp circuit 96 to establish a reference level. Then, the red image signals are converted into digital signals in an A/D converter 97 and then sent to a logarithmic transformer 98 which comprises a look-up table memory. The logarithmic transformer 98 transforms the digital image signals into logarithmic values as image signals proportional to densities. The CPU 52 writes a data table stored in the ROM 89 in the logarithmic transformer 98 before picking up an image of the picture frame on the film framing mask 73 with the TV camera 83.

A chroma correction circuit 99 is provided commonly to the three colors to correct the difference of spectral sensitivity between a color paper and the image pick-up element of the TV camera 33 and comprises three look-up table memories 99a for the respective colors each of which is used to weight the corresponding color image data, and an adder 99b which adds outputs, namely weighted image data, from the three look-up table memories 99a together and outputs the resultant data as red image data. The CPU 52, before starting film analysis, reads out three coefficients from the ROM 89 and changes them stepwise to provide a set of three coefficients for effecting chroma correction for red, and each coefficient is written in the corresponding look-up table memory 99a.

The image data thus corrected in chroma are then sent to either one of image memories 101a and 101b which is designated or selected by a demultiplexer 100. Each image memory 101a, 101b has a memory capacity sufficient for one full image area ( which is hereinafter referred to as one page) of the screen 33a of the color monitor 33 and is alternately read out and written in. Therefore, while reading out image data for one page from the image memory 101a under the control of the read controller 86, image data for a new page provided from the TV camera 83 can be written in the image memory 101b by the write controller 85. When the read controller 86 starts to read out the image data for the new page from the image memory 101b, the write controller 85 starts to overwrite in new image data for another page in the image memory 101a. As apparent from the above, the provision of the image memories 101a and 101b for storing two pages avoids the suspension of film analysis during reading in image data.

For controlling the writing in or reading out image data in the image memory 101a or 101b with the CPU 52, there is an interface 102. The image data read out from either one of the image memories 101a and 101b is sent to a gradation or contrast transforming circuit 104 through a multiplexer 103 wherein the image data are subjected to negative-to-positive transformation gradation transformation processing. The gradation transforming circuit 104 comprises sixteen look-up table memories, one individual to each of sixteen picture frames constituting one full image frame. In each look-up table memory table data on the result of measurement and table data prepared according to a manually inputted color correction value of each picture frame are written by the CPU 52. These table data can be provided by shifting the standard table data for each color stored in the ROM 89 with reference to color correction value.

The image data thus gradation-transformed are converted into serial signals in a parallel-to-serial converter 105 and then into analog signals in a D/A converter 106. The image signals in analog form are sent to the color monitor 33.

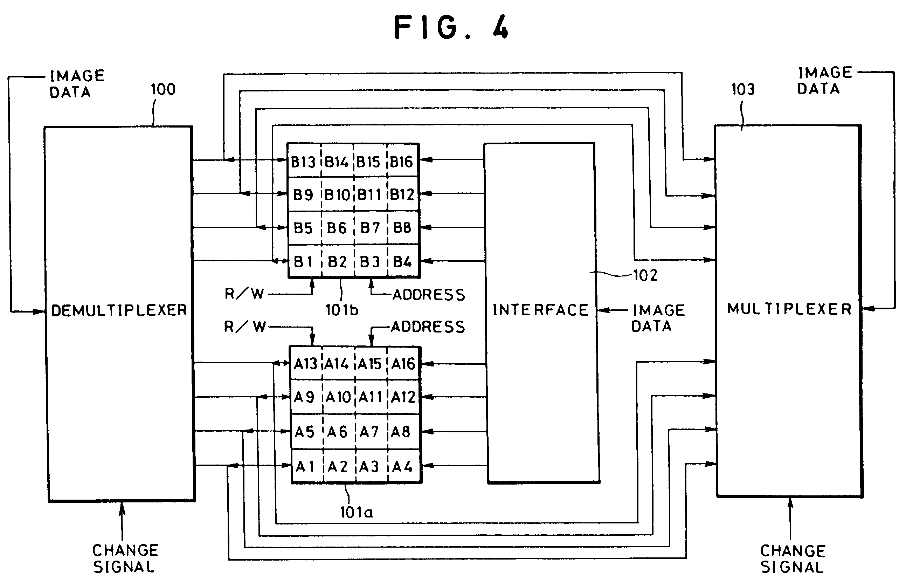

Referring now to Fig. 4, the image memories 101a and 101b are shown in detail. Each memory comprises four memory blocks each of which has four memory areas. In each memory area image data of a single picture frame are stored. For example, the fourth-from-the-top line of the memory block has four memory areas A1 to A4 to store the image data of the picture frames to be displayed in the bottom row A on the screen 33a of the color monitor 33 as shown in Fig. 5. The third line of the memory block has four memory areas A5 to A8 to store the image data of the picture frames to be displayed in the third-from-the-top row B on the screen 33a of the color monitor 33. The image memory 101b is identical in structure and operation to the other 101a and each memory area of the image memory 101 is specified with reference character B.

Fig. 6 shows part of the spliced film 13 including a spliced line. Two rolls of film 110 and 111 are connected between picture frames 110a and 111a to each other with a splicing tape 112. The spliced film 13 comprises a number of rolls of films connected to one another with such splicing tape 112. The splicing tape 112 can be optically detected by the spliced row sensor 72. It is noted that the splicing tape 112 is made of materials, such as white adhesive tapes, having reflective or transmittance factors different from that of the spliced film 13. Upon the spliced row sensor 72 detects the splicing tape 112, the CPU 52 provides data for a blank division and writes it in a corresponding memory area of current image memory, for example the image memory 101a.

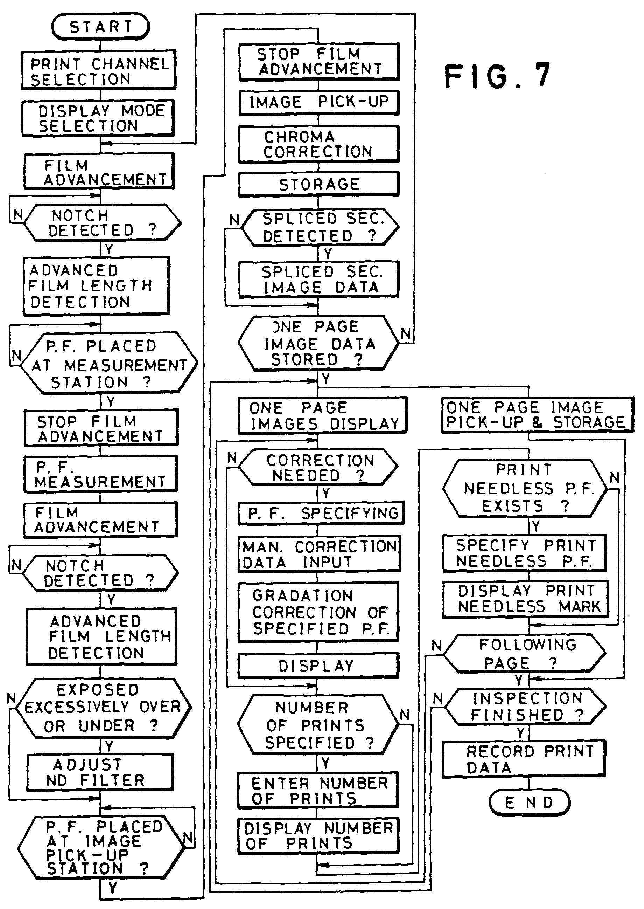

The operation of the color film analyzer depicted in Figs. 1 through 4 is best understood by reviewing Figs. 7 to 9, which are flow charts illustrating various sequences. After switching on the color film analyzer, to adapt the color film analyzer correspondingly to printing condition to which a printer to be used is set, one or more of the alphabetical and numerical keys 38 of the keyboard 34 are operated to select the same printing channel as that of the printer. Thereafter, the type and size of the spliced film 13 3 and other necessary data are entered by operating the alphabetical and numerical keys 38 and then a display mode, for example the sixteen-division display mode, is designated.

After mounting a reel 11, a leader tape attached to the leading end of the spliced film 13 is automatically threaded and wound around the take-up reel 12. When the spliced film 13 is advanced by means of the drive roller 16 driven by the pulse motor 53, the notch sensor 50 detects a first notch 113 to provide a notch signal. At the presence of the notch signal, drive pulses applied to the pulse motor 53 are counted to meter an advanced length of the spliced film 13. Upon counting a sufficient number of drive pulses to advance the first notch 113 by a length equal to the distance between the notch sensor 50 and the center line of the film framing mask 54 at the measuring station, the pulse motor 53 stops so as to place the picture frame with the first notch 113 in position in the film framing mask 54 at the measuring station.

The picture frame with the first notch 113 in the film framing mask 54 is illuminated with the lamp 55 and measured with the scanner 58 to detect densities of the respective pixels of the picture frame. At the same time, the color sensors 59-61 for red, green and blue detect red, green and blue LATDs of the picture frame. Thereafter, the pulse motor 53 starts again to advance the spliced film 13 until detecting a second notch 113 and places a picture frame with the second notch 113 in position in the film framing mask 54 at the measuring station. The same procedures as for the image frame with the first notch 113 are repeated for all picture frames with notches 113.

The first notch 113 of the first picture frame thus measured is again detected with the notch sensor 71 between the measuring station and the the image pick-up station. Upon the detection of the first notch 113, drive pulses applied to the pulse motor 80 are counted to meter a predetermined length of advancement of the spliced film 13. Thus, the first picture frame is placed in position in the film framing mask 73 at the image pick-up station. During the positioning the first picture frame at the image pick-up station, based on the LATDs detected with the color sensors 59-61, the first picture frame is judged whether it has been properly exposed, excessively over-exposed or excessively under-exposed. If the first picture frame is excessively over-exposed, the CPU 52 actuates the pulse motor 77 to remove or displace the ND filters 76 from the optical path to increase the quantity of light with which the first picture frame is illuminated. On the other hand, if the first picture frame is excessively under-exposed, the CPU 52 actuates the pulse motor 77 to place or insert the ND filters 76 into the optical path to decrease the quantity of light with which the first picture frame is illuminated.

Since the ND filters 76 have been adjusted in position before the first picture frame is placed in position at the image pick-up station, as soon as the first picture frame is placed at the image pick-up station, the TV camera can pick-up an image of the first picture frame to provide time serial image signals separately by color. The time serial image signals for red, green and blue are sent to the image processing section 83 and therein subjected to analog-to-digital conversion, chroma correction, storage and gradation transformation. As was previously described in connection with Fig. 3, the red image signals are, after amplified and clamped, converted into red image data in the A/D converter 97. The red image data are then converted into data proportional to density and sent to the chroma correction circuit 99. There, the respective density-proportional image data are multiplied by coefficients, respectively. The resultant red image data thus obtained are sent to an image memory, for example the memory 101a, designated by the demultiplexer 100 and written in the first memory area A of the sixteen memory areas designated by the write controller 85. In the same manner, the following picture frames are placed at the image pick-up station one after the other and images of the picture frames are picked up with the TV camera 83. Image data of these picture frames are written in the memory areas A2, A3 of the image memory 101a in the order.

Upon advancing the spliced film 13, the spliced line sensor 72 optically detects the splicing tape 112 attached to and splicing the rolls of films 110 and 111 to provide a splice signal, and sends it to the CPU 52. The CPU 52 writes "blank" data, namely "zero" in digital form, in a memory area between the areas wherein image data data of the adjacent picture frames of the spliced films 110 and 111. For example, the "zero" data are written in the memory area A11 of the image memory 101a to display a blank on the division 46 of the screen 33a. On the division of the screen on the left hand side of the division 46 an image of the last picture frame of the film 110 is displayed and on the division of the screen on the right hand side of the division 46 an image of the first picture frame of the film 111 is displayed.

When having written image data of the sixteen picture frames including a spliced section as a splice frame in the image memory 101a, the demultiplexer 100 selects the other image memory 101b, and simultaneously the CPU 52 begins to read out image data from the image memory 101a. In such a way, the image memories 101a and 101b are changed alternately inversely to write-in and read-out modes.

When the image memory 101a is in the read-out mode, the read controller 86 reads out image data from the image memory 101a and sends them to the gradation transforming circuit 104 through the multiplexer 103 for negative-to-positive image conversion and gradation transformation. Since the gradation transforming circuit 104 has a lookup table memory for each division of the screen 33a and corrects image data in gradation with a look-up table data of the corresponding division where the image data is displayed as a positive image. The respective lookup table memories stores table data generally different from one another according to images of the respective picture frames. The table data are, as was previously described, provided by shifting the standard table data stored in the ROM 89 with reference to density correction value based on data detected by the scanner 58 and color correction value based on data detected by color sensors 59-61.

The image data thus corrected in gradation are converted into serial signals with the parallel-to-serial converter and then into analog signals with the A/D converter 106. The analog image signals are sent to the color monitor 33 by color to display one page of positive color images of the sixteen picture frames, namely fifteen positive color images 45 and one blank image 46, on the respective divisions of the screen 33a. These images are practically separated with white margins from one another on the screen 33a.

Because the images displayed on the screen 33a of the color monitor 33 are temporarily simulated as printed images, they should be judged whether they are suitable in color balance and color density. Since a spliced section of the spliced film 13 is displayed as the blank image 46 on the screen 33a, the first picture frame of each roll of film can easily be identified. Generally, it may be desirable to finish prints of one roll of film with a same tone. For this reason, it is effected to judge whether all of the images between two blank images are substantially similar in color and density.

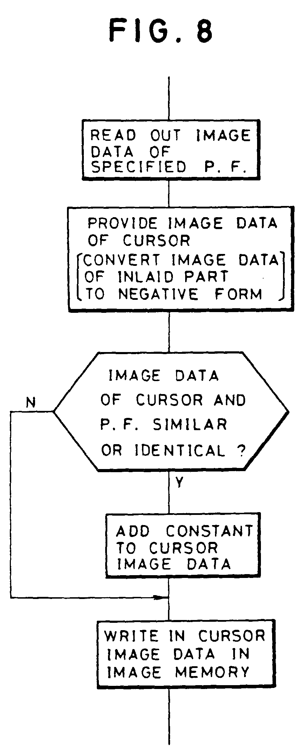

If the simulated image on any division of the screen is not suitable, the picture frame specifying keys 40 of the keyboard 34 are operated to identify or designate the picture frame having the unsuitable simulated image. As a result, as shown in Fig. 8, the image data of the picture frame thus specified are read out from the image memory 101a and written in the work RAM 90 through the interface 102. Then from the work RAM 90, image data of part of the specified image where an image of the cursor 47 is to be inlaid are read out and sent to the CPU 52. The image data of the part of the specified image are converted from negative form to positive form and changed to image data of the the cursor 47.

Generally, when inlaying an image of the picture frame identifying cursor 47 in a specified image on the screen 33a, the image of the picture frame identifying cursor 47 is preferred to be significantly different in color from part surrounding the cursor image. For making the image of the picture frame identifying cursor 47 different in color from the image of the specified image to be inlaid with the cursor image, the image data of the cursor 47 are compared with the image data of the specified image stored in the work RAM 90 to judge the similarity or identity of color between both data. If in fact these data are similar or identical in color, the data of the cursor image are changed by adding or subtracting a constant value, respectively.

The image data of the cursor 47 thus obtained are sent to the image memory 101a through the interface 102 which is temporarily changed to the write-in mode and written in the memory area from which the image data of the specified image have been read out. The image data written in the image area of the image memory 101a are converted from negative form to positive form in the gradation transforming circuit 104 and therefore the image of the cursor 47 is displayed in a positive image as part of the specified positive image. If in the event that a wrong picture frame is specified, a clear key is operated to rewrite image data of the wrongly specified picture frame temporarily in the work RAM 90 in the corresponding memory area of the image memory 101a. Thus, the image of the wrongly specified picture is displayed on the screen 33a without the image of the cursor 47.

After the specifying of a picture frame, the color key 35 and/or density key 36 are operated to enter color and/or density manual correction data. According to the manual correction data, lookup table data of a lookup table memory corresponding to the division where the image of the specified picture frame are renewed to correct the image of the specified picture frame in color and/or density. If the first correction is insufficient, the color key 35 and/or density key 36 are operated again. If an image of another picture frame is required to be corrected in color and/or density, the picture frame specifying keys 40 are operated to write the image data of the previously specified picture frame temporarily stored in the work RAM 90 in the image memory 101a through the interface 102. Thereafter, the image data of the another specified picture frame are read out from the image memory 101a and written in the work RAM 90. Thus the image data of previously and newly specified picture frames are replaced with each other. Thus the image of the cursor 47 disappears from the corrected image of the previously specified picture frame and appears in the image of the newly specified picture frame. The image of the newly specified picture frame can be corrected in color and/or density in the same manner.

When making prints at the time of developing a roll of film, the printer automatically provides one print for each picture frame. Therefore, it is not necessary to specify the number of prints to be made. However, if more than one print are requested, the numbers of prints to be made are specified for the respective picture frames. In addition, when extra prints will be requested later, the number of extra prints is to be specified as to the picture frame. For this-, after specifying the picture frame through the picture frame specifying key 40, the numerical keys 38 of the keyboard 34 are operated to enter the number of extra prints. The CPU 52 reads out image data of the picture frame specified from a memory area, for example the memory area A8, of the image memory 101a and stores temporarily them in the work RAM 90. The temporary storage of image data is effected to display the original image of the specified picture frame on the screen 33 when the specified number of prints is disappeared from the screen by operating the clear key. The CPU 52 provides image data of the number of prints and writes it in the memory area A8 of the image memory 101a. Data of the specified picture frame and the number of prints, of which data are read out simultaneously, are displayed as an inlaid image on the screen 33. In this embodiment, the number 48 is displayed as a bright image with a square dark background.

When a same number of prints are requested for all of the picture frames of a roll of film, the division 46 where a blank image at the head of a series of images of the picture frames of the roll of film is displayed is specified through the frame picture specifying keys 40. Then, the number of extra prints to be made for all the picture frames is specified. As a result, a specified number 46a is displayed substantially at the center of the specified division 46 as a bright image with a dark background.

In the case that a same number of extra prints are requested for almost all of the picture frames of a roll of film excepting some picture frames, after specifying a division of blank image and the number of prints common to the almost all of the picture frames, each exceptional picture frame and the number of prints of the exceptional picture frame are specified. The common number and exceptional numbers are both stored in the RAM 67 and recorded as punched codes in the paper tape 30 after the completion of negative film analysis.

If the image displayed on the screen 33 is blurred or has no major subject, the picture frame specifying keys 40 are operated to specify the picture frame of the image and then the key 39 is operated to instruct no necessity of making a print of the specified picture frame. As a result, the image data of the specified picture frame stored in a memory area of the image memory 101a, for example the memory area A2, is transferred to the work RAM 90 and part of the image data of the specified picture frame is retrieved, converted into negative image data and then written in the memory area A2. In such a way, an image of the specified picture frame with a negative center area is displayed on specified division of the screen 33a. The negative center area forms a print-needless mark 49. This mark 49 may be colored if desired.

When all of the displayed images are analysed and judged to be suitable, the page change key 41 is operated to replace the analysed images with the following page of images. The image data of sixteen picture frames including or not including a spliced section are read out from the image memory 101b and displayed as positive images on the screen 33a of the color monitor 33 in the same manner as the previous page of images. During the analysis of the following page of images, another sixteen images are picked up by the TV camera and image data of the sixteen picture frames are written in the image memory 101a.

When all of picture frames of the spliced film 13 including a plurality of rolls of films have been analysed, the operation key 39 is operated to record the print data in the RAM 67 as punched codes in the paper tape 30. The paper tape is punched to record data codes indicating, for example, the spliced section 46, film type and film size, common data including the number of prints common to all of the picture frames in this order and thereafter, exposure correction data and prints number or print-needless data of each picture frame in order or frame number.

The data tape 30 is set in a printer for making prints from the analysed spliced film 13. The printer reads the common data first and sequentially the data individual to each picture frame required to be printed upon making prints of the required picture frame. According to these data, the printer is controlled to make favorable prints. The printer is provided with color sensors for detecting red, green and blue large area transmittance densities (LATDs). According to the detected LATDs exposures for red, green and blue are determined. Based on the exposures and exposure correction data read from the data tape 30, actual exposures are obtained with which the printer controls the proportion of three colors of printing light.

When having selected to display one page of images in the twelve-division display mode, the magnetic floppy 29 is set in the color film analyzer. The color film analyzer reads the four reference images from the floppy 29 and writes them in the work RAM 90. The image data of the reference images are read out and written in the memory areas A13-A1 6 of the image memory 101a and the memory areas B13-B16 of the image memory 101b which are corresponding to the first or uppermost line of divisions D of the screen 33a of the color monitor 33. Accordingly, images of the spliced film 13 are picked up by twelve frames and displayed in lower three lines of divisions A-C of the screen 33a.

Upon analysing images of the spliced film 13 displayed in the lower three image lines A-C are compared with any one or all of the reference images in the first image row D to simulate favorable images.

When having selected to display an image in the single image display mode, the image pick-up and display is effected by picture frame. In this case, the image data of one picture frame is magnified and displayed on the central four divisions of the screen 33a of the color monitor 33. The magnification of image is effected either in an electrical interpolation of image data or in shortening the sampling period of the A/D converter 97. This image magnification may be effected to any one of images displayed in the sixteen or twelve division display mode when the one image is specified for color correction.

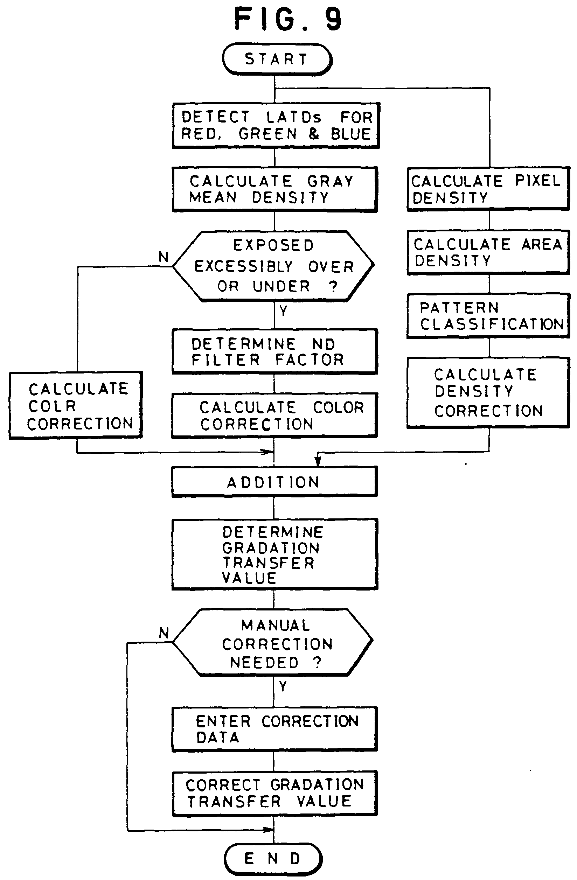

Referring now to Fig. 9 showing the sequential operation of gradation transforming, each picture frame of the film placed at the measuring station is measured with the scanner 63 and color sensors 59-61 to detect densities of each pixel of the picture frame and LATDs of the picture frame for red, green and blue, respectively. The LATDs are arithmetically averaged to provide a gray mean density. The gray mean density thus obtained is compared with reference gray mean densities of the excessively over-exposed picture frame and of the excessively under-exposed picture frame. If the gray mean density of the measured picture frame is higher than the reference gray mean density of the excessively over-exposed picture frame, the measured picture frame is judged excessively over-exposed. On the other hand, if the gray mean density of the measured picture frame is lower than the reference gray mean density of the excessively under-exposed picture frame, the measured picture frame is judged excessively under-exposed. According to the decision, the ND filters are controlled to make a proper exposure in the previously described manner. For an excessively over- or under-exposed picture frame, color correction values for cyan, yellow and magenta are calculated base on the LATDs. For picture frames other than such excessively over- and under-exposed picture frames, color correction values for red, green and blue are calculated based on the LATDs.

The scanner 58 scans the picture frame at the measuring station to detect densities of a number of points within a previously specified area. From the densities an arithmetic mean density is calculated for the specified area. In a same manner, arithmetic mean densities for a plurality of areas of the picture frame. Based on the mean densities, the picture frame is classified to a normarily illuminated scene or back-lit scene. A density correction value for each color is calculated by using one of previously provided operation formulas according to the classified scene.

The color correction value and density correction value thus obtained are added together by color and then written in the RAM 67. Here, density correction is represented by a correction value for cyan, magenta or yellow and the density correction value is added to the color correction value after being converted into a color correction value by color. Based on the added correction value a gradation transforming value is calculated for each color with which the standard table data is shifted. These calculations are performed after the measurement of the picture frame and before the following picture frame is placed at the measuring station.

As was previously described, the ROM 89 stores standard table data different according to colors for the respective colors. Accordingly each standard table data is read out being shifted according to the gradation transforming value of corresponding color and then written in corresponding area of the gradation transforming circuit 104.

If a manual correction is effected, a manually inputted color correction value and a manually inputted density correction value in the form of a color correction value are added to the color correction value read out from the RAM 67 and based on which a gradation transforming value is calculated to shift again the standard table data. Thereafter,_,the,ishifted standard table data is written in the gradation transforming circuit 104.

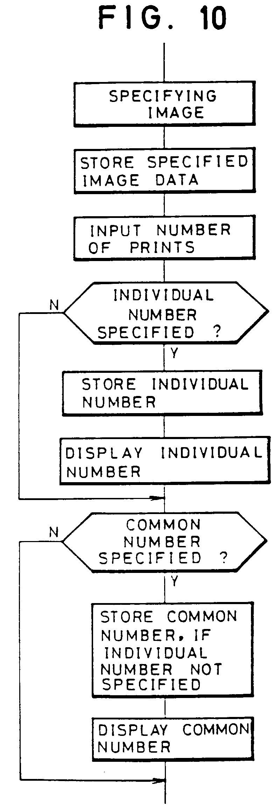

Referring now to Fig. 10 showing the sequential operation of specifying individually the numbers of prints for the respective picture frames of a roll of film included in the spliced film 13. If the number of prints is specified commonly to the respective picture frames of a roll of film, the individually specified number of prints is preferentially used in printing. The number of prints for a specified picture frame is entered as an individual printing data and is stored in the RAM 67 correspondingly to image data of the specified picture frame. If the number of prints is specified as a printing data commonly to a plurality of picture frames of the roll of film of the spliced film 13, the common number of prints is also stored in the RAM correspondingly to image data of each picture frame. The CPU 52, when the common and individual numbers of prints are specified for a picture frame to be printed, writes preferentially, not the common number of prints, but the individual number of prints in the RAM 67. Accordingly, it is not happened to form double punched codes of the number of prints in the paper tape. Describing in more detail following Fig. 11, when specifying individually the number of prints for a picture frame of the spliced film 13, the picture frame is specified to store image data of the picture frame in the RAM 67. Then, data of the number of prints is specifically entered through the numerical keys 38. The CPU 52 makes a first decision whether an individual number of prints is specified for the specified picture frame. If the answer is yes, the CPU 52 stores data of the individual number of prints in the RAM 67 correspondingly to the image data of the specified picture frame and displays the specified individual number on the division of the screen 33a where the specified picture frame is displayed. Thereafter or when the answer to the first decision is no, the CPU 52 makes another decision whether a common number of prints is specified for the spliced section. The answer to the other decision is yes, the CPU 52 stores data of the common number of prints correspondingly to the image data of the specified picture frame if the specified picture frame has no individual number of prints. Then, the common number of prints is displayed. If the answer to the other decision is no, the last two steps are omitted.

## Claims

1. A video-type colour film analyser for displaying simulated colour images of a plurality of picture frames of a colour film web (13) consisting of a plurality of films (ll0, lll) spliced to one another, said simulated colour images being displayed in a matrix pattern on a video image display device (33a), said analyser comprising:
a colour TV camera (83) for providing colour image data of said plurality of picture frames;
memory means (84, 101a, 101b) for storing said colour image data;
means (85) for reading out said colour image data from said memory means to simulate and display colour print images of said picture frames on said video image display device (33a);
means (23) for detecting a spliced section between two of said plurality of films which are spliced to each other and displaying said detected spliced section as a blank image on said video image display device (33a) at a size equal to each colour image as simulated;
means (40) for specifying, one at a time, said images including said blank image displayed on said video image display device (33a);
data inputting means (38) for inputting a common number of prints common to all picture frames to be printed of one of said plurality of films which follows said spliced section when said blank image is specified, and an individual number of prints to be produced from a picture frame belonging to a specified simulated colour image when each of said simulated colour images is individually specified; and
means (42) for displaying said number of prints inputted through said data inputting means (38) in a portion of said specified image, and memory means (67) for storing said individual number of prints which has been inputted for each of said specified images and, if inputted, said common number of prints wherein
when both said common number and said individual number of prints are inputted, said individual number of prints is used for said specified simulated colour image in preference to said common number of prints.

## Patentansprüche

1. Video-Farbfilmauswertvorrichtung zum Darstellen simulierter Farbbilder aus einer Vielzahl von Einzelbildern eines Farbfilmstreifens (13), der aus mehreren Filmen (110, 111) besteht, die aneinandergeklebt sind, wobei die simulierten Farbbilder in einem Matrixmuster auf einer Video-Bildanzeigevorrichtung (33a) abgebildet werden, wobei die Auswertvorrichtung enthält:
eine Farbfernsehkamera (83) zum Liefern von Farbilddaten aus der vielzahl von Einzelbildern;
eine Speichereinrichtung (84, 101a, 101b) zum Speichern der Farbbilddaten;
eine Einrichtung (85) zum Auslesen der Farbbilddaten aus der Speichereinrichtung, um Farbabzüge von den Einzelbildern auf der Video-Bildanzeigevorrichtung (33a) zu simulieren und abzubilden;
eine Einrichtung (23) zum Erkennen eines geklebten Abschnitts zwischen zwei der aneinandergeklebten Filme, und zum Abbilden des erkannten geklebten Abschnitts als ein Leerbild auf der Video-Bildanzeigevorrichtung (33a) in einer Größe, die jedem Farbbild entspricht, das simuliert wird;
eine Einrichtung (40) zum aufeinanderfolgenden Spezifizieren der Bilder einschließlich des Leerbilds, die auf der video-Bildanzeigevorrichtung (33a) abgebildet werden;
eine Dateneingabeeinrichtung (38) zum Eingeben einer gemeinsamen Anzahl von Abzugen, die allen abzuziehenden Einzelbildern eines der Vielzahl der Filme gemeinsam ist, dcr dem geklebten Abschnitt folgt, wenn das Leerbild spezifiziert wird, und zum Eingeben einer individuellen Anzahl von Abzügen, die aus einem Einzelbild hergestellt werden sollen, das zu einem spezifizierten, simulierten Farbbild gehört, wenn jedes der simulierten Farbbilder individuell spezifiziert wird; und
eine Einrichtung (42) zum Darstellen der Anzahl von Abzügen, die von der Dateneingabeeinrichtung (38) in einen Teil des spezifizierten Bildes eingegeben wurden, und
eine Speichereinrichtung (67) zum Speichern der individuellen Anzahl der Abzüge, die für jedes der spezifiziercen Bilder eingegeben wurde, und, falls eingegeben, für die gemeinsame Anzahl der Abzüge, wobei
wenn sowohl die gemeinsame Anzahl der Abzüge und die individuelle Anzahl der Abzüge eingegeben werden, für das spezifizierte, simulierte Farbbild die individuelle Anzahl der Abzüge anstelle der gemeinsamen Anzahl der Abzüge benutzt wird.

## Revendications

1. Analyseur de film couleur du type vidéo pour afficher des images couleur simulées d'une pluralité de photogrammes d'une bande de films couleur (13) constituée par une pluralité de films (110, 111) raccordés les uns aux autres, lesdites images couleur simulées étant affichées selon un motif de matrice sur un dispositif d'affichage d'image vidéo (33a), ledit analyseur comprenant :
une caméra de TV couleur (83) pour produire des données d'image couleur de ladite pluralité de photogrammes ;
un moyen de mémoire (84, 101a, 101b) pour stocker lesdites données d'image couleur;
un moyen (85) pour lire lesdites données d'image couleur dans ledit moyen de mémoire afin de simuler et d'afficher des images de tirage couleur desdits photogrammes sur ledit dispositif d'affichage d'image vidéo (33a);
un moyen (23) pour détecter une section raccordée entre deux de ladite pluralité de films qui sont raccordés les uns aux autres et pour afficher ladite section raccordée détectée en tant qu'image vierge sur ledit dispositif d'affichage d'image vidéo (33a) selon une taille égale à celle de chaque image couleur telle que simulée ;
un moyen (40) pour spécifier, à raison d'une à la fois, lesdites images incluant ladite image vierge affichée sur ledit dispositif d'affichage d'image vidéo (33a) ;
un moyen d'entrée de données (38) pour entrer un nombre commun dc tirages commun à tous les photogrammes à tirer à partir de l'un de ladite pluralité de films qui suit ladite section raccordée lorsque ladite image vierge est spécifiée, et un nombre individuel de tirages à produire à partir d'un photogramme appartenant à une image couleur simulée spécifiée lorsque chacune desdites images couleur simulées est spécifiée individuellement ;
un moyen (42) pour afficher ledit nombre de tirages entré par l'intermédiaire dudit moyen d'entrée de données (38) dans une partie de ladite image spécifiée ; et
un moyen de mémoire (67) pour stocker ledit nombre individuel de tirages qui a été entré pour chacune desdites images spécifiées et s'il est entré, ledit nombre commun de tirages,
dans lequel, lorsque à la fois ledit nombre commun et ledit nombre individuel de tirages sont entrés, ledit nombre individuel de tirages est utilisé pour ladite image couleur simulée spécifiée de préférence audit nombre commun de tirages.
